# EUROPEAN PATENT APPLICATION

(11) **EP 4 156 444 A1**
(43) Date of publication of application: **29.03.2023**
(21) Application number: 21827907.3
(22) Date of filing: 22.02.2021
(51) Int. Cl.: H02J 7/00

(54) **CHARGER DETECTION CIRCUIT AND METHOD, AND ELECTROCHEMICAL DEVICE**

(30) Priority: 23.06.2020 CN 202010584128
(71) Applicant: DONGGUAN POWERAMP TECHNOLOGY LIMITED, Dongguan, Guangdong 523000 (CN)
(72) Inventor: QIN, Youqiang, Dongguan, Guangdong 523000 (CN); JIAO, Leiming, Dongguan, Guangdong 523000 (CN)
(74) Representative: Icosa
(86) International application number: PCT/CN2021/077295
(87) International publication number: WO 2021/258755

(57) **Abstract**

A circuit for detecting a charger includes a first photoelectric coupler, a first switch, and a control circuit. By the first switch and the first photoelectric coupler, whether an external port is connected to the charger is detected. When the charger is connected to the external port, the first switch and the first photoelectric coupler are turned on, and then a first signal is output to the control circuit. The present application also provides a method for detecting a charger and an electrochemical device. The circuit and method for detecting a charger and the electrochemical device according to the present application have the advantages of low power consumption, high safety performance, high detection accuracy, low cost and the like, can accurately identify standard chargers and high-voltage illegal chargers, and can significantly improve the security and stability of a battery.

## Description

### TECHNICAL FIELD

The present application relates to the field of battery technology, and in particular to a circuit and method for detecting a charger and an electrochemical device.

### BACKGROUND

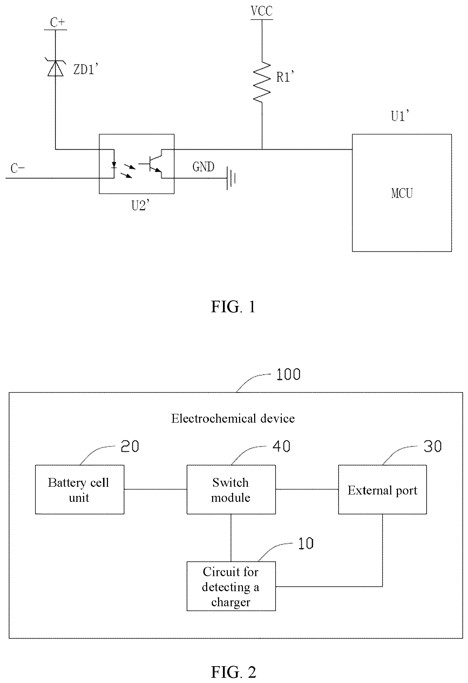

Generally speaking, a charger usually has a hard-wired identification signal, so that a battery can detect and identify the insertion of the charger through a hard-wired signal. As shown in FIG. 1, in the prior art, a voltage stabilizing diode ZD1' is used to work in a reverse breakdown state to drive a photoelectric coupler U2' to output a detection signal to a microcontroller unit U1'. Therefore, the identification and detection of the charger are realized.

However, the main disadvantages of the above-mentioned solution are low detection accuracy, high power consumption, and high cost. In addition, when the voltage of a battery pack is close to full charge, a misidentification phenomenon will occur, high-voltage illegal chargers cannot be identified, and the safety performance is low.

### SUMMARY

In view of the foregoing, it is necessary to provide a circuit and method for detecting a charger and an electrochemical device, which have the advantages of high safety performance, high detection accuracy, low cost and the like, can accurately identify the high-voltage illegal chargers, and can significantly improve the security and stability of the battery.

An embodiment of the preset application provides a circuit for detecting a charger, applied to an electrochemical device, wherein the circuit for detecting a charger includes a first photoelectric coupler, a first switch, and a control circuit;
the first photoelectric coupler is used to electrically connect a first terminal of an external port, the first switch and the control circuit; a first terminal of the first switch is grounded, a second terminal of the first switch is electrically connected to a second terminal of the external port, a third terminal of the first switch is electrically connected to the first photoelectric coupler, and the first switch is used to be turned on when the external port of the electrochemical device is connected to a first charger; and when the external port of the electrochemical device is connected to the first charger, the first photoelectric coupler is turned on and outputs a first signal to a first pin of the control circuit, wherein the first charger is a charger that outputs a voltage value within a safe charging voltage range. Therefore, by the first switch and the first photoelectric coupler, whether the charger is connected to the external port is detected, and when a standard charger is connected to the external port, the first switch and the first photoelectric coupler are turned on, and then the signal is output to the first pin of the control circuit. The standard charger can be accurately identified, the advantages of high detection precision, low cost and the like are realized, and the security and stability of the battery can be significantly improved.

According to some embodiments of the present application, the first photoelectric coupler includes a first light-emitting element and a first photosensitive element, a first terminal of the first light-emitting element is electrically connected to the first terminal of the external port, a second terminal of the first light-emitting element is electrically connected to the third terminal of the first switch, a first terminal of the first photosensitive element is electrically connected to a power supply and the control circuit, and a second terminal of the first photosensitive element is grounded.

According to some embodiments of the present application, when the external port is connected to the first charger, the first light-emitting element emits light, and the first photosensitive element is turned on to output the first signal to the control circuit.

According to some embodiments of the present application, the circuit for detecting a charger further includes a first diode, the first diode is used to prevent the first switch from being broken down by a reverse voltage, a cathode of the first diode is electrically connected to the second terminal of the external port, and an anode of the first diode is electrically connected to the second terminal of the first switch.

According to some embodiments of the present application, the circuit for detecting a charger further includes a second photoelectric coupler and a first voltage stabilizing diode, the second photoelectric coupler includes a second light-emitting element and a second photosensitive element, a first terminal of the second light-emitting element is electrically connected to an anode of the first voltage stabilizing diode, a cathode of the first voltage stabilizing diode is electrically connected to the first terminal of the external port, a second terminal of the second light-emitting element is electrically connected to the second terminal of the external port, a first terminal of the second photosensitive element is connected to the power supply, and a second terminal of the second photosensitive element is grounded.

According to some embodiments of the present application, when the external port is connected to a second charger, the first voltage stabilizing diode is reversely turned on, the second light-emitting element is turned on, and the second photosensitive element is turned on to output the first signal to a second pin of the control circuit; wherein the second charger is a charger that outputs a voltage value outside the safe charging voltage range. Therefore, by using the characteristic of reverse breakdown of the voltage stabilizing diode, when a voltage outside the safe charging voltage range is input, the voltage stabilizing diode can be reversely turned on, and the second photosensitive element is controlled to output the first signal. Hence, whether the external port is connected to the charger with a voltage value outside the safe charging voltage range can be accurately identified or detected through the voltage stabilizing diode, thereby preventing a system damage caused since the high-voltage illegal charger is connected to the battery device, and improving the safety performance of the battery device.

According to some embodiments of the present application, when the external port is connected to the first charger, the second light-emitting element does not emit light, the second photosensitive element is cut off to output a second signal to the control circuit, and the first charger is a charger that outputs a voltage value within the safe charging voltage range.

According to some embodiments of the present application, the circuit for detecting a charger further includes a second voltage stabilizing diode, an anode of the second voltage stabilizing diode is electrically connected to the cathode of the first voltage stabilizing diode, and a cathode of the second voltage stabilizing diode is electrically connected to the first terminal of the external port; when the external port is connected to the second charger, the first voltage stabilizing diode and the second voltage stabilizing diode are both reversely turned on, the second light-emitting element is turned on, and the second photosensitive element is turned on to output the first signal to the second pin of the control circuit.

According to some embodiments of the present application, the circuit for detecting a charger further includes a second diode, an anode of the second diode is electrically connected to the second terminal of the second light-emitting element, and a cathode of the second diode is electrically connected to the second terminal of the external port.

According to some embodiments of the present application, the circuit for detecting a charger further includes a first filter circuit, the first filter circuit is used to filter a signal output by the first photoelectric coupler and then output the same to the first pin of the control circuit, the first filter circuit includes a first resistor and a first capacitor, a first terminal of the first resistor is electrically connected to the first terminal of the first photosensitive element, a second terminal of the first resistor is electrically connected to the first pin of the control circuit, and the first pin of the control circuit is also grounded through the first capacitor.

According to some embodiments of the present application, the circuit for detecting a charger further includes a second filter circuit, the second filter circuit is used to filter a signal output by the second photoelectric coupler and then output the same to the second pin of the control circuit, the second filter circuit includes a second resistor and a second capacitor, a first terminal of the second resistor is electrically connected to the first terminal of the second photosensitive element, a second terminal of the second resistor is electrically connected to the second pin of the control circuit, and the second pin of the control circuit is also grounded through the second capacitor.

According to some embodiments of the present application, the first switch is an NPN-type triode, and the first terminal, the second terminal and the third terminal of the first switch are respectively a base electrode, an emitting electrode and a collecting electrode of the NPN-type triode.

According to some embodiments of the present application, when the external port is not connected to the first charger, the first photosensitive element is cut off to output the second signal to the control circuit.

An embodiment of the present application further provides a method for detecting a charger. The method for detecting a charger includes: detecting whether an external port is connected to a charger; wherein both terminals of the external port are electrically connected to a first photoelectric coupler and a first switch respectively; if the external port is connected to a first charger, turning on the first photoelectric coupler to output a first signal to a first pin of a control circuit; and if the external port is not connected to the first charger, cutting the first photoelectric coupler off to output a second signal to the control circuit.

According to some embodiments of the present application, both terminals of the external port are electrically connected to a first terminal of a first light-emitting element in the first photoelectric coupler and the first switch respectively, a second terminal of the first light-emitting element is electrically connected to the first switch, a first terminal of a first photosensitive element in the first photoelectric coupler is electrically connected to a power supply, and a second terminal of the first photosensitive element is grounded.

According to some embodiments of the present application, both terminals of the external port are electrically connected to a second terminal of a second light-emitting element in a second optical coupler and a cathode of a first voltage stabilizing diode respectively, a first terminal of a second photosensitive element in the second optical coupler is connected to the power supply, and a second terminal of the second photosensitive element is grounded.

According to some embodiments of the present application, the method for detecting a charger further includes: if the external port is connected to a second charger, reversely turning on the first voltage stabilizing diode, and turning on the second light-emitting element; and turning on the second photosensitive element to output the first signal to a second pin of the control circuit; the second charger being a charger that outputs a voltage value outside a safe charging voltage range.

An embodiment of the present application further provides an electrochemical device, wherein the electrochemical device includes a battery cell unit, a switch module, an external port, and the above circuit for detecting a charger, the switch module is electrically connected in a power supply loop connected to the battery cell unit and the external port, and the switch module is used to control the turn-on or cut-off of the power supply loop.

According to the circuit and method for detecting a charger and the electrochemical device provided by the embodiments of the present application, by the first switch and the first photoelectric coupler, whether the charger is connected to the external port is detected, and when the charger is connected to the external port, the first switch and the first photoelectric coupler are turned on, and then the signal is output to the control circuit. In this way, the circuit and method for detecting a charger and the electrochemical device according to the embodiments of the present application have the advantages of low power consumption, high safety performance, high detection accuracy, low cost and the like, can accurately identify the standard charger and the high-voltage illegal charger, and can significantly improve the security and stability of the battery.

### BRIEF DESCRIPTION OF DRAWINGS

FIG. 1 is a circuit diagram of a circuit for detecting a charger in the prior art.
FIG. 2 is a block diagram of an electrochemical device according to an embodiment of the present application.
FIG. 3 is a circuit diagram of a preferred embodiment of a circuit for detecting a charger in FIG. 2.
FIG. 4 is a flowchart of steps of a method for detecting a charger according to an embodiment of the present application.

**Reference signs of main elements**

| | |
|---|---|
| Electrochemical device | 100 |
| Circuit for detecting a charger | 10 |
| Control circuit | 12 |
| First filter circuit | 14 |
| Second filter circuit | 16 |
| Battery cell unit | 20 |
| External port | 30 |
| Switch module | 40 |
| First photoelectric coupler | U1 |
| Second photoelectric coupler | U2 |
| Microcontroller | U3 |
| First switch to third switch | Q1 to Q3 |
| Capacitors | C1 to C2 |
| Resistors | R1 to R6 |
| First voltage stabilizing diode | ZD1 |
| Second voltage stabilizing diode | ZD2 |
| First diode | D1 |
| Second diode | D2 |

The following specific embodiments will describe the present application in more detail in conjunction with abovementioned accompanying drawings.

### DETAILED DESCRIPTION

The following clearly and fully describes the technical solutions in the embodiments of the present application in conjunction with the accompanying drawings in the embodiments of the present application. Apparently, the described embodiments are merely a part but not all of the embodiments of the present application.

Please refer to FIG. 2, which is a block diagram of a preferred embodiment of an electrochemical device 100 according to the present application. The electrochemical device 100 may be electrically connected to an external device. Specifically, the electrochemical device 100 includes a circuit for detecting a charger 10, a battery cell unit 20, an external port 30 and a switch module 40. In the embodiment of the present application, the external port 30 is used to electrically connect an external device 200. It can be understood that the external device in the embodiment of the present application may be a charger or a load device.

The circuit for detecting a charger 10 is electrically connected to the external port 30 for detecting and identifying whether the external port 30 is electrically connected to the charger. The switch module 40 is electrically connected to a power supply loop of the battery cell unit 20 and the external port 30. The switch module 40 is used to control the turn-on or cut-off of the power supply loop. In this way, the circuit for detecting a charger 10 can correspondingly control the state of the switch module 40 according to a connection state of the external port 30, thereby controlling the charging and discharging of the battery cell unit 20.

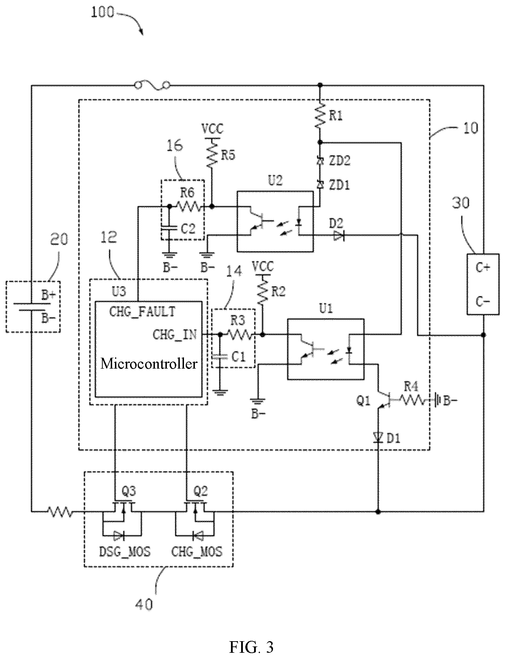

Please refer to FIG. 3, which is a circuit diagram of a preferred embodiment of the electrochemical device 100 according to the present application.

In the embodiment of the present application, the circuit for detecting a charger 10 includes a first photoelectric coupler U1, a first switch Q1, a control circuit 12, and a first filter circuit 14.

The control circuit 12 may include a microcontroller U3. The microcontroller U3 may include a first pin CHG_IN and a second pin CHG_FAULT.

Specifically, the first photoelectric coupler U1 includes a first light-emitting element and a first photosensitive element. A first terminal of the first light-emitting element is electrically connected to a first terminal C+ of the external port 30 through a resistor R1. A second terminal of the first light-emitting element is electrically connected to a first terminal of the first switch Q1. A first terminal of the first photosensitive element is electrically connected to a power supply VCC through a resistor R2. The first terminal of the first photosensitive element is also electrically connected to the control circuit, and a second terminal of the first photosensitive element is grounded.

The first filter circuit 14 includes a resistor R3 and a capacitor C1. The first terminal of the first photosensitive element is electrically connected to the first pin CHG_IN of the microcontroller U3 through the resistor R3. The first pin CHG_IN of the microcontroller U3 is also grounded through the capacitor C1.

It can be understood that the first terminal of the first light-emitting element in the embodiment of the present application is an anode of a diode, and the second terminal of the first light-emitting element is a cathode of the diode. The first terminal of the first photosensitive element is a collecting electrode of a photosensitive triode, and the second terminal of the first photosensitive element is an emitting electrode of the photosensitive triode.

A first terminal of the first switch Q1 is grounded through a resistor R4. A second terminal of the first switch Q1 is electrically connected to a second terminal C-of the external port 30. The third terminal of the first switch Q1 is electrically connected to the second terminal of the first light-emitting element.

In a preferred embodiment, the circuit for detecting a charger 10 may further include a first diode D1, and the second terminal of the first switch Q1 is electrically connected to an anode of the first diode D1. A cathode of the first diode D1 is electrically connected to the second terminal C- of the external port 30. Therefore, the first diode D1 can prevent the first switch Q1 from being broken down by a reverse voltage.

It can be understood that the first switch Q1 in the embodiment of the present application may be an NPN-type triode. The first terminal, the second terminal, and the third terminal of the first switch Q1 may be a base electrode, an emitting electrode and a collecting electrode of the NPN-type triode respectively. In other preferred embodiments, the first switch Q1 may also be other electronic switches, for example, an NMOS field effect transistor.

In the embodiment of the present application, the switch module 40 includes a second switch Q2 and a third switch Q3. A first terminal, a second terminal, and a third terminal of the second switch Q2 are electrically connected to the control circuit 12, the second terminal C- of the external port 30 and a second terminal of the third switch Q3 respectively. A first terminal, the second terminal and a third terminal of the third switch Q3 are electrically connected to the control circuit 12, a second terminal of the second switch Q2 and a second terminal B- of the batter cell unit 20 respectively. A first terminal B+ of the battery cell unit 20 is electrically connected to a first terminal C+ of the external port.

It can be understood that in the embodiment of the present application, the first switch Q1 is used to be turned on when the external port 30 is connected to a first charger and to be turned off when the external port 30 is not connected to the first charger. Therefore, when the external port 30 is connected to the first charger, the first light-emitting element emits light, and the first photosensitive element is turned on to output a first signal to the control circuit 12. When the external port 30 is not connected to the first charger, the first light-emitting element does not emit light, and the first photosensitive element is cut off to output a second signal to the control circuit 12.

In the embodiment of the present application, the first charger is a standard charger that outputs a voltage value in a safe charging voltage range.

Specifically, when the first terminal C+ and the second terminal C- of the external port 30 are not connected to the first charger, a voltage difference between the first terminal of the first switch Q1 and the second terminal of the first switch Q1 is close to 0V, that is, the voltage difference between the base electrode and the emitting electrode of the NPN-type triode is 0V. At this time, the first switch Q1 is in a cut-off state. At this time, the first light-emitting element does not emit light, and the first photosensitive element is also in the cut-off state. That is, the first photoelectric coupler U1 is in an off state, and the power supply VCC outputs a high-level signal to the first pin CHG_IN of the microcontroller U3. When the first terminal C+ and the second terminal C- of the external port 30 are respectively connected to the first charger, the voltage of the first terminal of the first switch Q1 will be greater than that of the second terminal of the first switch Q1, that is, the voltage difference between the base electrode and the emitting electrode of the NPN-type triode will exceed 0.6V, and the first switch Q1 will be switched from the cut-off state to the turn-on state. At this time, the first light-emitting element emits light, and the first photosensitive element is turned on. That is, the first photoelectric coupler U1 is in the turn-on state, the first pin CHG_IN of the microcontroller U3 is grounded, and the first photoelectric coupler U1 outputs a low-level signal to the first pin CHG_IN of the microcontroller U3.

Further, the circuit for detecting a charger 10 further includes a second photoelectric coupler U2, a first voltage stabilizing diode ZD1, a second voltage stabilizing diode ZD2, and a second diode D2. The second photoelectric coupler includes a second light-emitting element and a second photosensitive element. A first terminal of the second light-emitting element is electrically connected to an anode of the first voltage stabilizing diode ZD1. A cathode of the first voltage stabilizing diode ZD1 is electrically connected to an anode of the second voltage stabilizing diode ZD2. A cathode of the second voltage stabilizing diode ZD2 is electrically connected to the first terminal C+ of the external port through the resistor R1. A second terminal of the second light-emitting element is electrically connected to an anode of the second diode D2. A cathode of the second diode D2 is electrically connected to the second terminal C- of the external port 30. A first terminal of the second photosensitive element is connected to the power supply VCC through a resistor R5, and a second terminal of the second photosensitive element is grounded.

The circuit for detecting a charger 10 further includes a second filter circuit 16, and the second filter circuit 16 includes a resistor R6 and a capacitor C2. The first terminal of the second photosensitive element is electrically connected to the second pin CHG_FAULT of the microcontroller U3 through the resistor R6. A second pin CHG_FAULT of the control circuit is also grounded through the capacitor C2. The capacitors C1 and C2 are non-polar capacitors, which can be quickly charged and discharged.

When a second charger of which the charging voltage is higher than that of the first charger is connected to the external port 30, the first voltage stabilizing diode ZD1 and the second voltage stabilizing diode ZD2 are reversely turned on. The second photoelectric coupler U2 is turned on to input the low-level signal to the second pin CHG_FAULT of the microcontroller U3. Similarly, if no second charger is connected to the external port 30, the second photoelectric coupler U2 will be in a cut-off state, and the second pin CHG_FAULT of the microcontroller U3 receives the high-level signal output from the power supply VCC. When the external port 30 is connected to the first charger, the second light-emitting element does not emit light, and the second photosensitive element is cut off to output the high-level signal to the second pin CHG_FAULT of the microcontroller U3.

It can be understood that the first terminal of the second light-emitting element in the embodiment of the present application is the anode of the diode, and the second terminal of the second light-emitting element is the cathode of the diode. The first terminal of the second photosensitive element is the collecting electrode of the photosensitive triode, and the second terminal of the second photosensitive element is the emitting electrode of the photosensitive triode.

It can be understood that the first charger mentioned above is a standard charger, that is, a charger that can output a voltage value within the safe charging voltage range. The second charger is a charger that outputs a voltage value outside the safe charging voltage range. That is, the voltage output by the second charger will damage a battery system and affect the safety performance of the battery system. It can be understood that in the embodiment of the present application, the safe charging voltage range may be that the charging voltage of each battery cell does not exceed a charging limit voltage of 4.2V, which is the charging limit voltage used by most lithium-ion batteries currently in use. The lithium battery charged to 4.2V is safe. If the charging voltage exceeds 4.2V, the safety of the lithium battery begins to decrease as the voltage rises. The higher the voltage is, the more dangerous the battery is, and fire and explosion are easily caused. That is, the safe charging voltage range of 13 battery cells in the embodiment of the present application is a charging voltage not exceeding 54.6V.

A working principle of the circuit for detecting a charger and the electrochemical device according to the present application will be described below by taking the circuit diagram shown in FIG. 3 as an example.

When in use, if the external port 30 is not connected to the standard charger, a voltage difference between the first terminal and the second terminal of the first switch Q1 is close to 0V, that is, the first switch Q1 is in the cut-off state, so that the first photoelectric coupler U1 is in the cut-off state. At this time, the first pin CHG_IN of the microcontroller U3 receives the high-level signal input by the power supply VCC. In addition, the external port 30 is not connected to a high-voltage charger, and the second photoelectric coupler U2 will also be in the cut-off state. At this time, the second pin CHG_FAULT of the microcontroller U3 receives the high-level signal output by the power supply VCC. Therefore, the microcontroller U3 can determine that the external port is not connected to any charger based on the high-level signals received by the two signal pins.

Further, if the external port 30 is connected to the standard charger. At this time, the voltage of the second terminal of the first switch Q1 is less than the voltage of the first terminal of the first switch Q1, that is, the voltage difference between the first terminal and the second terminal of the first switch Q1 is greater than 0.6V, and the first switch Q1 is switched from the turn-off state to the turn-on state. Therefore, the first terminal C+ of the external port 30 can be grounded through the first light-emitting element, so that the first light-emitting element is turned on, and thus the first photosensitive element is turned on. In this way, the power supply VCC will be grounded through the resistor R2. The first pin CHG_IN of the microcontroller U3 is also grounded. At this time, the first pin CHG_IN of the microcontroller U3 receives the low-level signal from the first photoelectric coupler U1 through the first filter circuit 14. That is, if a level state of the first pin CHG_IN of the microcontroller U3 changes from a high level to a low level, it can be determined that the external port 30 has been connected to the standard charger. The microcontroller U3 outputs a control signal to the switch module 40 to control the battery cell unit 20 to enter a charging state.

Then, if the external port 30 is connected to a high-voltage charger, the first voltage stabilizing diode ZD1 and the second voltage stabilizing diode ZD2 are reversely turned on. At this time, the second light-emitting element of the second photoelectric coupler U2 is turned on, so that the second photosensitive element is turned on. At this time, the second pin CHG_FAULT of the microcontroller U3 is grounded, that is, the second pin CHG_FAULT of the microcontroller U3 receives the low-level signal output by the second photoelectric coupler U2 through the second filter circuit 16. That is, if the level state of the second pin CHG_FAULT of the microcontroller U3 changes from a high level to a low level, it can be determined that the external port 30 has been connected to the high-voltage charger. The microcontroller U3 outputs the control signal to the switch module 40 to control the battery cell unit 20 to stop charging and discharging. The system damage caused since the high-voltage illegal charger is connected to the battery device is prevented, thereby improving the safety performance of the battery device.

It should be noted that when the high-voltage charger is connected to the external port 30, both the first photoelectric coupler U1 and the second photoelectric coupler U2 will be turned on. That is, both the first pin CHG_IN and the second pin CHG_FAULT of the microcontroller U3 will receive the low-level signal. At this time, the microcontroller U3 will preferentially determine the level state of the second pin CHG_FAULT. That is, the microcontroller U3 will preferentially control the state of the switch module 40 based on the level state of the second pin CHG_FAULT. Therefore, by detecting the level state of the second pin CHG_FAULT of the microcontroller U3 in real time, whether the external port is connected to the high-voltage charger can be effectively identified.

In addition, the first filter circuit 14 and the second filter circuit 16 can filter and limit a signal containing charger insertion information and an identification signal of the high-voltage illegal charger. Therefore, the signal port of the microcontroller U3 can be protected. Meanwhile, interference components in the signal to be detected can also be filtered, thereby improving the accuracy of signal identification and detection. In order to improve the detection accuracy of the microcontroller U3 and improve the anti-interference ability, resistance values of the resistors R3 and R6 and capacitance values of the capacitors C1 and C2 can be adjusted according to actual applications, thereby adjusting a filter cut-off frequency.

When an external load device is connected to the external port 30, the voltage of the second terminal C- of the external port is instantly pulled up to the voltage of the first terminal B+ of the battery cell unit due to the effect of a bus capacitance of the controller. Therefore, the total reverse voltage of a battery pack is borne between the first terminal and the second terminal of the first switch Q1. The first diode D1 is used to prevent the first switch Q1 from being broken down. The first diode D1 may select an appropriate reverse withstand voltage value according to needs.

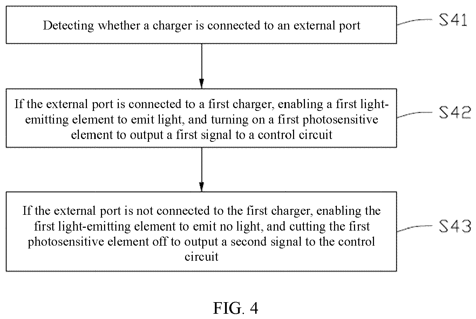

Please refer to FIG. 4, which is a flowchart of steps of a method for detecting a charger according to an embodiment of the present application. The method for detecting a charger may include the following steps.

Step S41: whether the charger is connected to an external port is detected.

In the embodiment of the present application, both terminals of the external port are electrically connected to a first terminal of a first light-emitting element in a first photoelectric coupler and a first switch. A second terminal of the first light-emitting element is electrically connected to the first switch. A first terminal of a first photosensitive element in the first photoelectric coupler is electrically connected to a power supply, and a second terminal of the first photosensitive element is grounded. Therefore, if the external port is connected to the charger, the first switch will be turned on.

Step S42: if the external port is connected to the first charger, the first light-emitting element emits light, and the first photosensitive element is turned on to output a first signal to a first pin of a control circuit.

Step S43: if the external port is not connected to the first charger, the first light-emitting element does not emit light, and the first photosensitive element is cut off to output a second signal to the control circuit.

In addition, in other preferred embodiments, both terminals of the external port are also electrically connected to the second terminal of a second light-emitting element in a second optical coupler and the cathode of a first voltage stabilizing diode respectively. The first terminal of a second photosensitive element in the second optical coupler is connected to the power supply, and a second terminal of the second photosensitive element is grounded.

Therefore, if the external port is connected to a second charger, the first voltage stabilizing diode is reversely turned on, the second light-emitting element is turned on, and the second photosensitive element is turned on. The first signal is output a second pin of the control circuit. The second charger is a high-voltage charger outputting an ultra-high voltage that does not meet safety charging specifications.

Therefore, according to the circuit and method for detecting a charger and the electrochemical device provided by the embodiments of the present application, whether the charger is connected to the external port is detected through the first switch and the first photoelectric coupler, and when the standard charger is connected to the external port, the first switch and the first photoelectric coupler are turn on. Further, the signal is output to the control circuit. By the two voltage stabilizing diodes and the second photoelectric coupler, whether the high-voltage charger is connected is detected. In this way, the circuit and method for detecting a charger, and the electrochemical device according to the embodiments of the present application have the advantages of low power consumption, high safety performance, high detection accuracy, and low cost, can accurately identify the standard charger and the high-voltage illegal charger, and can significantly improve the security and stability of the battery.

Those of ordinary skill in the art should realize that the above embodiments are only used to illustrate the present application instead of limiting the present application. The appropriate changes and alterations made to the above embodiments fall within the scope of protection claimed by the present application as long as they are within the scope of an essential spirit of the present application.

## Claims

1. A circuit for detecting a charger, applied to an electrochemical device, wherein the circuit for detecting a charger comprises a first photoelectric coupler, a first switch, and a control circuit;
the first photoelectric coupler is used to electrically connect a first terminal of an external port of the electrochemical device, the first switch and the control circuit; a first terminal of the first switch is grounded, a second terminal of the first switch is electrically connected to a second terminal of the external port, a third terminal of the first switch is electrically connected to the first photoelectric coupler, and the first switch is used to be turned on when the external port is connected to a first charger; and
when the external port is connected to the first charger, the first photoelectric coupler is turned on and outputs a first signal to the control circuit.

2. The circuit for detecting a charger according to claim 1, wherein the first photoelectric coupler comprises a first light-emitting element and a first photosensitive element, a first terminal of the first light-emitting element is electrically connected to the first terminal of the external port, a second terminal of the first light-emitting element is electrically connected to the third terminal of the first switch, a first terminal of the first photosensitive element is electrically connected to a power supply and the control circuit, and a second terminal of the first photosensitive element is grounded.

3. The circuit for detecting a charger according to claim 2, wherein when the external port is connected to the first charger, the first light-emitting element emits light, and the first photosensitive element is turned on to output the first signal to the control circuit.

4. The circuit for detecting a charger according to claim 2, wherein the circuit for detecting a charger further comprises a first diode, the first diode is used to prevent the first switch from being broken down by a reverse voltage, a cathode of the first diode is electrically connected to the second terminal of the external port, and an anode of the first diode is electrically connected to the second terminal of the first switch.

5. The circuit for detecting a charger according to claim 1, wherein the circuit for detecting a charger further comprises a second photoelectric coupler and a first voltage stabilizing diode, the second photoelectric coupler comprises a second light-emitting element and a second photosensitive element, a first terminal of the second light-emitting element is electrically connected to an anode of the first voltage stabilizing diode, a cathode of the first voltage stabilizing diode is electrically connected to the first terminal of the external port, a second terminal of the second light-emitting element is electrically connected to the second terminal of the external port, a first terminal of the second photosensitive element is connected to the power supply, and a second terminal of the second photosensitive element is grounded.

6. The circuit for detecting a charger according to claim 5, wherein when the external port is connected to a second charger, the first voltage stabilizing diode is reversely turned on, the second light-emitting element emits light, and the second photosensitive element is turned on to output the first signal to a second pin of the control circuit; wherein the second charger is a charger that outputs a voltage value outside a safe charging voltage range.

7. The circuit for detecting a charger according to claim 5, wherein when the external port is connected to the first charger, the second light-emitting element does not emit light, the second photosensitive element is cut off to output a second signal to the control circuit, and the first charger is a charger that outputs a voltage value within the safe charging voltage range.

8. The circuit for detecting a charger according to claim 6, wherein the circuit for detecting a charger further comprises a second voltage stabilizing diode, an anode of the second voltage stabilizing diode is electrically connected to the cathode of the first voltage stabilizing diode, and a cathode of the second voltage stabilizing diode is electrically connected to the first terminal of the external port; when the external port is connected to the second charger, the first voltage stabilizing diode and the second voltage stabilizing diode are both reversely turned on, the second light-emitting element emits light, and the second photosensitive element is turned on to output the first signal to the second pin of the control circuit.

9. The circuit for detecting a charger according to claim 6, wherein the circuit for detecting a charger further comprises a second diode, an anode of the second diode is electrically connected to the second terminal of the second light-emitting element, and a cathode of the second diode is electrically connected to the second terminal of the external port.

10. The circuit for detecting a charger according to claim 1, wherein the circuit for detecting a charger further comprises a first filter circuit, the first filter circuit is used to filter a signal output by the first photoelectric coupler and then output the same to a first pin of the control circuit, the first filter circuit comprises a first resistor and a first capacitor, a first terminal of the first resistor is electrically connected to the first terminal of the first photosensitive element, a second terminal of the first resistor is electrically connected to the first pin of the control circuit, and the first pin of the control circuit is also grounded through the first capacitor.

11. The circuit for detecting a charger according to claim 6, wherein the circuit for detecting a charger further comprises a second filter circuit, the second filter circuit is used to filter a signal output by the second photoelectric coupler and then output the same to the second pin of the control circuit, the second filter circuit comprises a second resistor and a second capacitor, a first terminal of the second resistor is electrically connected to the first terminal of the second photosensitive element, a second terminal of the second resistor is electrically connected to the second pin of the control circuit, and the second pin of the control circuit is also grounded through the second capacitor.

12. The circuit for detecting a charger according to claim 1, wherein the first switch is an NPN-type triode, and the first terminal, the second terminal and the third terminal of the first switch are respectively a base electrode, an emitting electrode and a collecting electrode of the NPN-type triode.

13. The circuit for detecting a charger according to claim 2, wherein when the external port is not connected to the first charger, the first photosensitive element is cut off to output the second signal to the control circuit.

14. A method for detecting a charger, applied to an electrochemical device, wherein the method for detecting a charger comprises:
detecting whether an external port of an electrochemical device is connected to a charger; wherein both terminals of the external port are electrically connected to a first photoelectric coupler and a first switch respectively;
if the external port is connected to a first charger, turning on the first photoelectric coupler to output a first signal to a first pin of the control circuit; and
if the external port is not connected to the first charger, cutting the first photoelectric coupler off to output a second signal to the control circuit.

15. The method for detecting a charger according to claim 14, wherein both terminals of the external port are electrically connected to a first terminal of a first light-emitting element in the first photoelectric coupler and the first switch respectively, a second terminal of the first light-emitting element is electrically connected to the first switch, a first terminal of a first photosensitive element in the first photoelectric coupler is electrically connected to a power supply, and a second terminal of the first photosensitive element is grounded.

16. The method for detecting a charger according to claim 14, wherein both terminals of the external port are electrically connected to a second terminal of a second light-emitting element in a second optical coupler and a cathode of a first voltage stabilizing diode respectively, a first terminal of a second photosensitive element in the second optical coupler is connected to the power supply, and a second terminal of the second photosensitive element is grounded.

17. The method for detecting a charger according to claim 16, wherein the method for detecting a charger further comprises:
if the external port is connected to a second charger, reversely turning on the first voltage stabilizing diode, and turning on the second light-emitting element; and turning on the second photosensitive element to output the first signal to a second pin of the control circuit;
the second charger being a charger that outputs a voltage value outside a safe charging voltage range.

18. An electrochemical device, wherein the electrochemical device comprises a battery cell unit, a switch module, an external port, and the circuit for detecting a charger according to any one of claims 1 to 13, the switch module is electrically connected in a power supply loop connected to the battery cell unit and the external port, and the switch module is used to control the turn-on or cut-off of the power supply loop.
